# Europäisches Patentamt

## European Patent Office

## Office européen des brevets

(11) Publication number: **0 182 904**
**B1**

## EUROPEAN PATENT SPECIFICATION

(45) Date of publication of patent specification: **06.09.89**

(51) Int. Cl.⁴: **G 06 K 11/06**, G 06 F 3/033

(21) Application number: **85903459.7**

(22) Date of filing: **13.05.85**

(86) International application number:
**PCT/US85/00883**

(87) International publication number:
**WO 85/05477 05.12.85 Gazette 85/26**

(60) Divisional application **88201782 filed on 22.08.88.**

(54) **PRECISION DISPLAY POSITION DESIGNATION SYSTEM USING COARSE TOUCH PANEL INPUT.**

(30) Priority: **18.05.84 US 612006**

(43) Date of publication of application:
**04.06.86 Bulletin 86/23**

(45) Publication of the grant of the patent:
**06.09.89 Bulletin 89/36**

(84) Designated Contracting States:
**BE CH DE FR GB IT LI NL SE**

(56) References cited:
**EP-A-0 083 395**
**FR-A-2 080 100**
**US-A-4 122 438**
**US-A-4 277 783**
**US-A-4 313 109**

**Electrical Design News, nr. 15, 29 July 1984, Boston (US). Richard Comerford: "Pointing-device innovations enhance user/machine interfaces, pages 54-66**

(73) Proprietor: **Hughes Aircraft Company**
**7200 Hughes Terrace Bldg. C1, MS A-126**
**P.O.Box 45066**
**Los Angeles California 90045-0066 (US)**

(72) Inventor: **BEINING, August, H.**
**818 North Adlena Drive**
**Fullerton, CA 92633 (US)**

(74) Representative: **Colgan, Stephen James et al**
**CARPMAELS & RANSFORD 43 Bloomsbury Square**
**London WC1A 2RA (GB)**

# EP  0 182 904  B1

(56) References cited:

Electronic Design, volume 31, nr. 20, September 1983, Denville (US). Carl Warren: "Personal Computers peripherals", pages 150-160

Project Summary of the United States EnvironmentalProtection Agency,EPA,Research Triangle Park NC 27711 - EPA-600/S2-81-146,October 1981,C.W.Lewis:"The tapered element oscillating microbalance:a monitor for shortterm measurement of fine aerosol mass concentration",see page 1,:"Description":figure 1

## Description

Background of the invention

This invention relates to touch panel systems.

Reference is made to division application No. 88201782.5.

It has previously been proposed to provide an interruptable array of light beams extending across a faceplate to designate display positions. Typical patents which show this type of system include U.S. Patent No. 3,764,813, granted Obtober 9, 1973, U.S. Patent No. 3,775,560, granted November 27, 1973 and U.S. Patent No. 4,198,623 granted April 15, 1980. In using such systems it is most convenient to use the finger or pointer to designate the desired display position with a display marker such as a video position designation marker, or cursor, which may for example be an X in a circle or the like. The finite thickness of a finger, however, and coarse accuracy of the touch detection unit resulting from the spacing of the light beams, may mean that the video position designation marker is not positioned sufficiently accurately for some purposes.

Accordingly, an important object of the present invention is to precisely locate a display marker such as a video position designation marker, or cursor, despite the use of a relatively coarse touch panel detection input.

Other prior art of interest is described in the following documents.

EP—A—0083395:—this document describes the use of a collimated light beam reflected from a rotating mirror scanner. A precise calculation of geometric angles is taught to identify a pointer position.

US—A—4122438:—this document teaches the use of a "scaled down" movement of the cursor following a coarse adjustment. The scaled down movement is at a pre-determined fixed scaling factor and occurs when a subsequent pointer movement is made.

US—A—4277783:—the system described in this document is specifically adapted for use on plasma-type displays normally associated with having an inherently slow pointer tracking speed. In this system, scanning of the entire display screen is impractical (or at least slow). The system predicts the next patch to be scanned on the basis of speed and direction of movement of the pointer.

According to the invention, there is provided a display position designation system using a coarse touch panel input comprising: means for providing a display; means for locating a cursor in said display to a predetermined positional accuracy; touch panel input means corresponding generally to the face of said display, and having a positional accuracy which is relatively coarse as compared with the predetermined positional accuracy of the display; means for periodically scanning said touch panel input means to obtain the coarse position data based on the location of a pointer during successive scan intervals of time. Means for successively determining new precision cursor positions during each scan interval and/or positioning the cursor in the precise newly determined position on said display, characterised in that the means for determining new cursor positions are arranged to determine said positions based on the prior position of the cursor, the new location of the pointer, a velocity factor based upon prior positions and locations of the cursor and pointer, and a damping element, wherein, for large pointer movements, the damping element is negligible in relation to the velocity factor, resulting in cursor movements closely relating to the pointer movements, whereas for small pointer movements of the order of the predetermined positional accuracy of the display, the damping element is significant in relation to the velocity factor, allowing for cursor positioning to an accuracy greater than that of the predetermined positional accuracy of the input means.

In this manner, the marker is determined not only by the location of a pointer indicating a spot on the display screen, but also by a velocity correction function (which may include an acceleration factor) involving the direction and magnitude of the shift in position of the pointer between successive intervals of time.

The invention to be described can be used with other types of displays such as arrays of lights, liquid crystal, plasma panel or arrays of lighted switches.

Another problem which occasionally interferes with the proper operation of touch panel displays is initial and termination transients. Thus, for example, touch initiation dynamics such as angled entry, or a fly or other insect or a piece of clothing might partially interrupt one of the light beams, and this could provide a false location of the cursor. Similarly, at the end of the act of marking of the desired video position on the display through the use of a person's finger, the finger might be withdrawn at an angle, and if this terminating transient carries over into the positioning of the video designation marker, or cursor, an error could be introduced.

Accordingly, another object of the present invention is to avoid position errors which might be introduced by transients, often at the beginning or the end of marking a point on the display, or by inputs from the touch detection devices such as random interruption of the light beams for an instant.

In order to meet this object, the invention preferably takes the form defined in Claim 7.

In accordance with this preferred aspect of the invention, input transients or momentary interruptions of the light beams, are eliminated by electronic circuitry which delays shifting the position of the video designation marker until a predetermined plurality of scans indicates positive and steady interruption of the beams. Also, when the pointer is removed from the touch panel, instead of following to the last observed location of the pointer to position the cursor, which might be an erroneous path taken as the finger is lifted from the touch input device, the system selects a display position for the cursor based on a scan dating back from the final scan in which the touch input device was active.

Viewed from another aspect, the invention involves precision cursor position from coarse input data by position determinations extending over several scan intervals, and avoidance of the introduction of false data at the transitions between the steady interrupted beam conditions and the uninterrupted beam state.

It is also noted that the present invention is applicable to other types of fine and relatively coarse touch panel input devices, involving crossed wire or other switch elements or capacitive pads, as well as to light beam interrupting touch pad input circuits. Further, the input touch panel faceplate need not overlie the display screen but could, for example, be separately located, as long as the operator can see the movement of the cursor on the display resulting from the operator's positioning a pointer such as a finger.

Advantages of the new system include the capability of very accurate display position designations despite the availability of only relatively coarse position data as indicated by the location of a finger on the surface of the faceplate of the touch input device. In addition, false indications are avoided and accurate final positioning of the video designation marker is possible, even when the finger is inserted or removed at an acute angle relative to the faceplate. In addition, the need for precisely aligning the touch panel with the display is eliminated, and parallax problems or errors are also eliminated.

Another useful feature is the capability of "jumping" the cursor to a new position on the display upon initial touch activation by the pointer thereby eliminating the need to locate the cursor prior to designating a new position on the display and consequently increasing the speed of operator input.

Other advantages of the invention will become apparent from a consideration of the following detailed description and from the accompanying drawings of embodiments of the invention.

Brief description of the drawings

Fig. 1 shows a display and touch panel electronic unit, of a type to which the present invention is applicable;

Fig. 2 is a schematic block diagram of a display and touch panel system;

Fig. 3 is a cross-sectional view through a cathode ray tube and a display enclosure indicating the physical configuration of a touch panel light beam system;

Fig. 4 indicates how information is entered into the touch panel array through the use of a person's index finger touching the faceplate and interrupting an array of light beams;

Fig. 5 is a schematic diagram showing a switching system for energizing or scanning the light beam paths which extend across the faceplate of a display;

Fig. 6 is a block diagram indicating one type of microprocessor arrangement which may be employed to implement the present invention;

Fig. 7 is a block diagram indicating one type of hardware which may be employed to implement the invention;

Fig. 8 is a sequence diagram showing transient suppression techniques; and

Fig. 9 shows a sequence diagram for providing smooth cursor precision positioning data from relatively coarse input information from the touch panel.

Detailed description of the invention

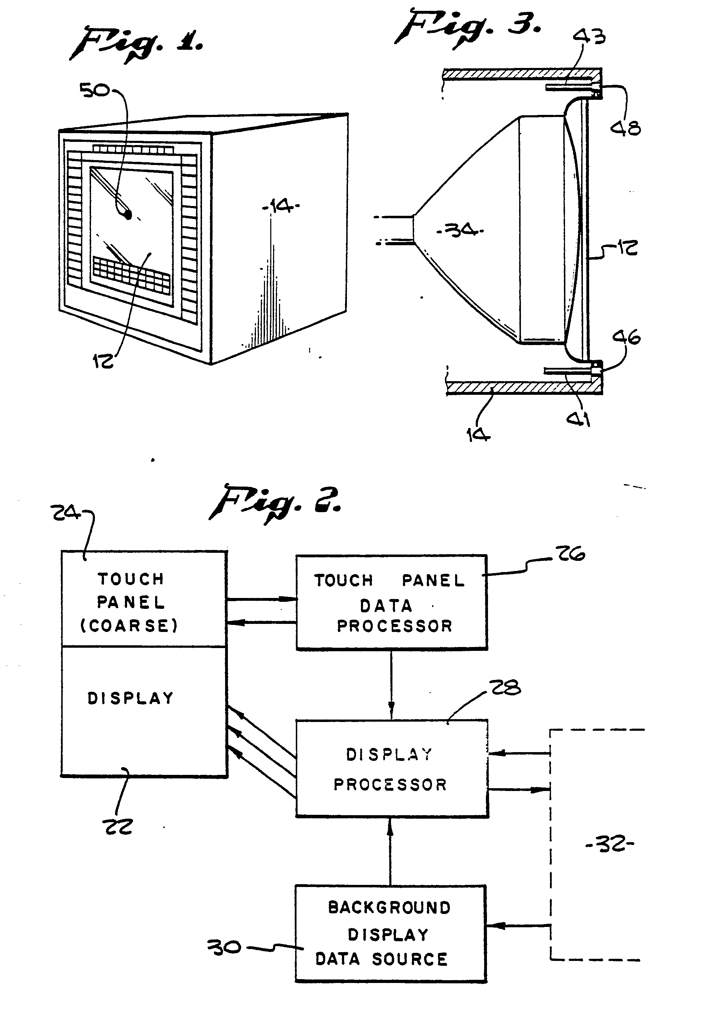

Referring more particularly to the drawings, Fig. 1 shows a display 12 mounted in a housing 14, for the electronic system. Across the front of the display 12 is a faceplate, and beams of light are directed over the surface of this faceplate both horizontally and vertically, so that the coordinate location of a finger may be readily and consistently determined based on the interruption of the light beams.

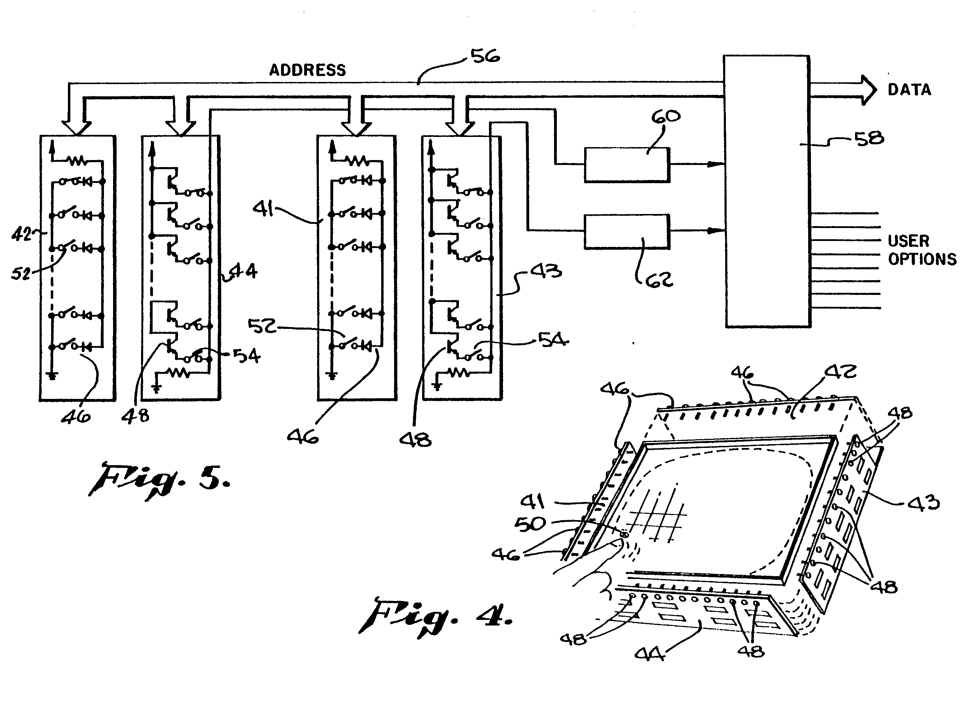

Fig. 2 is a schematic block circuit diagram illustrating the principles of the invention on a broad level. More specifically, a display 22 is provided with an associated touch panel 24 which is only capable of providing relatively coarse positional information relative to the side of a picture element of the video display 22 as will be explained in more detail with reference to the other Figs. The touch panel data processor 26 determines the location of a pointer such as a person's finger on the touch panel 24 as a result of the cyclic scanning of the phototransistors and the light emitting diodes which make up the touch panel 24, and a sensing of the timed outputs from each of the phototransistors. Information as to the location of the person's finger on the touch panel is supplied from the touch panel data processor 26 to the display processor 28. Background display information is supplied from circuitry 30 to the display processor 28 to provide the desired background information such as a map, keyboard or the like upon which the video position designation marker is superimposed. An electronic system 32 is indicated schematically in Fig. 2, with interconnections between the display processor 28 and the background display data source 30, because the touch panel and display system is often connected to a larger electronic system, which may be one of a large number of types of systems.

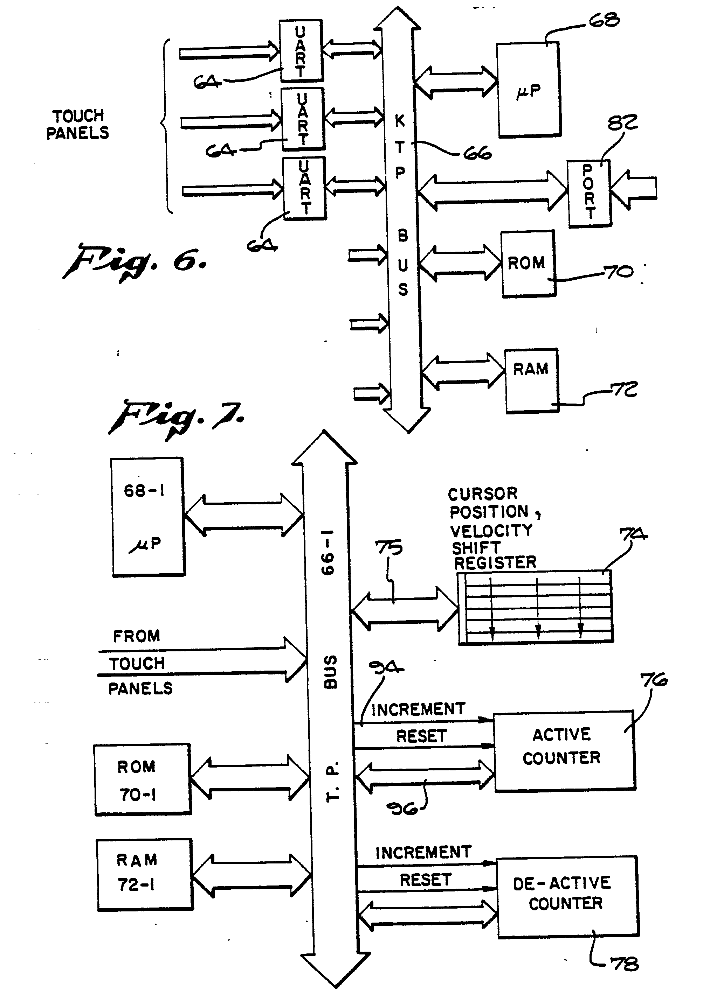

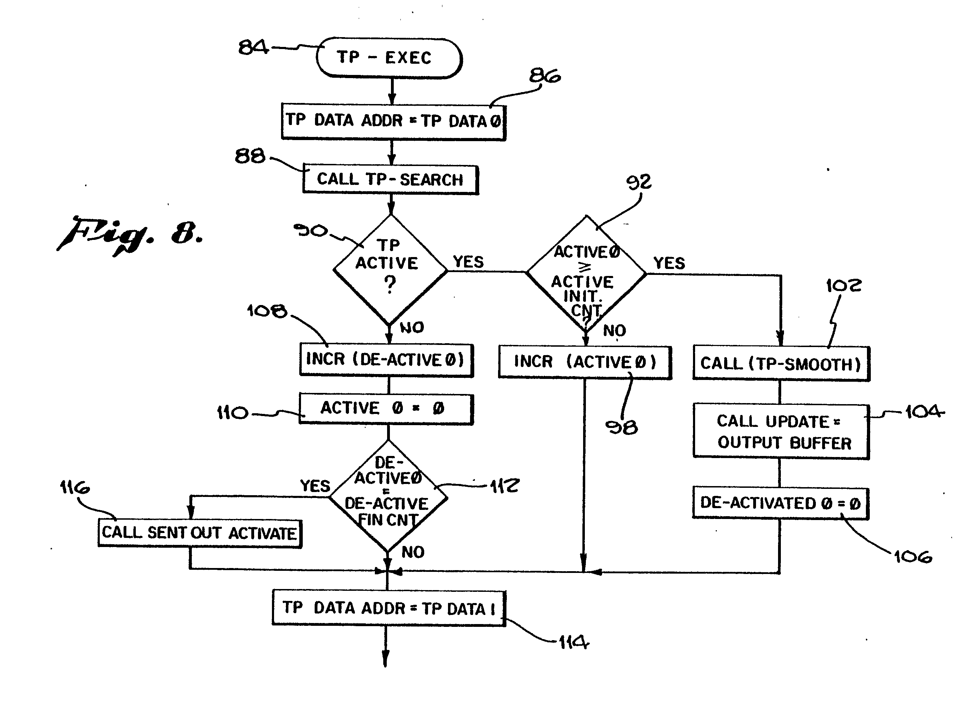

Fig. 3 is a partial cross-sectional view which may be taken through the faceplate 12 and the housing 14 in a plane perpendicular to the faceplate 12 and extending along a horizontal line through the faceplate 12. In Fig. 3 a cathode ray tube 34 has its display surface close to the faceplate 12. As shown in Figs. 3 and 4, a set of printed circuit boards 41 through 44 are located in the proximity of the front of the catode ray tube 34 and the faceplate 12. Each of these printed circuit boards are provided with either photo-emitters such as light emitting diodes 46, or photodetectors such as phototransistors 48. The light emitting diodes 46 provide beams of light such as infrared extending across in close proximity to the faceplate 12. Individual light beams extends from one light emitting diode 46 on one edge of the faceplate to a paired phototransistor 48 on the other edge of the faceplace. Switching circuits enable successive pairs of light emitting diodes 46 and phototransistors 48 sequentially, and the output from each phototransistor 48 is sequentially sampled. When no output is received from a particular phototransistor 48 during the sampling period, this indicates that the light beam has been interrupted. The particular pair of light emitting diode 46 and phototransistor 48 may be identified by the sample timing of the enabling switching circuit as the scan sequentially proceeds across the faceplate. This may be accomplished either simultaneously or sequentially both relative to the horizontally extending beams of infrared light and with regard to the vertically extending beams of light. By locating the coordinate location of the finger touching the faceplate, both horizontally and vertically, through circuitry included in the touch panel data processor 26 (Fig. 2), suitable signals may be supplied to the display processor 28, and a display designation position marker, or cursor, may be positioned on the display by the display processor 28. This could be in the form of a symbol such as a circle with an X across it positioned in full view just above the pointer, for example, as shown at reference numeral 50 in Fig. 1 and Fig. 4.

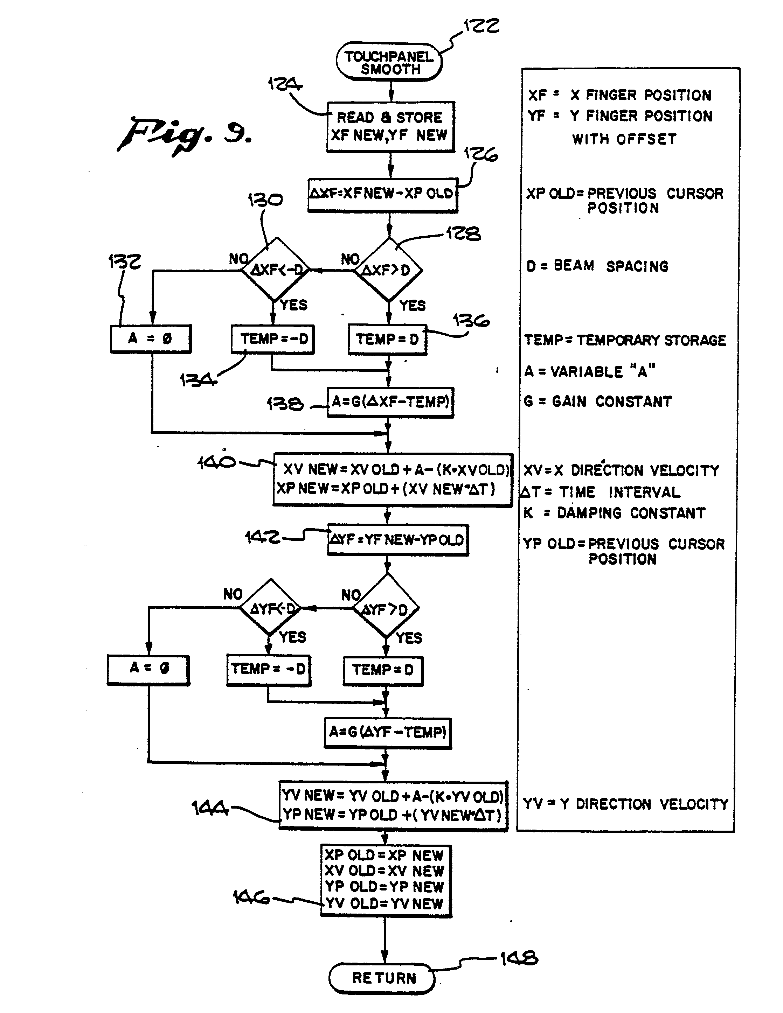

Fig. 5 shows schematically the technique for scanning the light beams, or the pairs of light emitting diodes 46 and phototransistors 48 which are employed in the light beam scanning arrangements. More specifically, each light emitting diode 46 has an enabling switch 52 associated with it, and each phototransistor 48 has an enabling switch 54 connected to it. An address bus 56 extends from a signal processing circuit illustrated generally as a microprocessor 58 to the circuit boards 41 through 44. It should of course be understood that a microprocessor 58 may not be used as such in lieu of counting logic and that it is illustrated for ease of understanding the operation of the circuit of Fig. 5. The switches 52 and 54 are, of course, semiconductor switches and are energized sequentially according to the addresses supplied on the bus 56. Pairs of semiconductor switches 52 and 54 associated with a single beam of light, have the same address, so they are enabled simultaneoously, while none of the other LED switches or phototransistor switches are turned on during this interval for sequential operation. Scanning of the two emitter-detector arrays is accomplished by the application of a series of addresses on bus 56. In practice, a complete cycle of scanning is accomplished approximately 30 times a second. The address information supplied on bus 56 is correlated with the output signal information from the detector array indicating a pulse or no-pulse, from the common horizontal output pulse processor and amplifier circuit 60 and from the corresponding vertical output pulse processor and amplifier circuit 62. The output pulse circuits 60 and 62 can be combined for sequential operation.

Fig. 6 is a block diagram which shows one arrangement for implementing touch panel data processor 26 functions described herein (a microprocessor implementation). Alternatively a hard wired logic could be used. In the Fig. 6 approach information from several touch panels may be supplied via the buffer circuits 64 to the KTP BUS 66 associated with the microprocessor 68. Incidentally, the designation "KTP" stands for Keyboard and Touch Panel because keyboard inputs (from a keyboard which is not shown), may also be supplied to the bus 66 along with the information from the touch panels. The letters "UART" which appear on the buffers 64, stand for Universal Asynchronous Receiver Transmitters, and facilitate the handling of serial bytes of digital information. The BUS 66 can be implemented as eight or sixteen parallel wires. The microprocessor 68 that has been used is an Intel 8610 16-Bit H-MOS Microprocessor as described in the "Microprocessor and Peripheral Handbook", copyrighted in 1983 by Intel Corporation. One type of UART buffer 64 that has been used as the Intel 8251A Programmable Communication Interface Universal Synchronous/Asynchronous Receiver/Transmitter described in the "Microprocessor and Peripheral Handbook" copyrighted in 1983 by Intel Corporation.

Suitable memory indicated by ROM 70 are provided to control the data processing sequences, and adequate random access memory or RAM 72 is also provided. One ROM memory 70 that has been used is the Intel 2716 16K "2K by 8" U. V. Erasable PROM described in Memory Component Handbook copyrighted in 1983 by Intel Corporation. One RAM memory 72 that has been used is the Intel 2186 "8192 by 8 bit Integrated RAM" also described in the Intel Memory Component Handbook.

The showing of Fig. 7 is somewhat more detailed than that of Fig. 6 and indicates schematically the mode of operation of certain circuit components which are shown as possibly being hardwired, including a data shift register 74, an active counter 76 and a "deactive" counter 78. A shift register 74 which has been used is a Texas Instruments TI 5ULS165 Parallel Load 8-Bit Shift Register with Complementary Outputs described in the Memory Components Handbook copyrighted in 1981 by Texas Instruments Company. The active counter 76 used is a Texas Instruments TI 5ULS163 Asynchronous 4-Bit Counter described in the Texas Instrument Memory Components Handbook. The deactive counter 78 can also be a TI 5ULS163 Asynchronous 4-Bit Counter. The microprocessor 68-1 and bus 66-1 are also shown in Fig. 7. Fig. 7 will be discussed in greater detail in connection with the sequence diagrams of Figs. 8 and 9. Of course, the sequence diagram of Figs. 8 and 9 can also be implemented in a computer program using the Intel AMP-86 Assembly Language described in the 8086/8087/8088 Macro Assembly Language Reference Manual copyrighted in 1980 by Intel Corporation.

Fig. 8 is a sequence diagram indicating the steps which are taken by the microprocessor 68 under the control of the read-only memory 70, and other instructions which may be provided by the host system through the input/output port 82 (see Fig. 6). The input/output port 82 can be the Intel 8155H 2048 Bit Static HMOS RAM, described in the Intel Memory Components Handbook. The sequence of operations shown in Fig. 8 is known as the touch panel executive sequence (TP-EXEC) and its start is indicated by the block 84.

The first step in the sequence is to select touch panel data TP-DATA ADDR from any one of the buffer circuits 64 as shown in Fig. 6. This step is indicated by the block 86 indicating that data from touch panel "Ø" is to be selected, and of course, the output information is to be supplied back to the display unit associated with touch panel "Ø". The next step in the sequence is to initiate a review of touch panel "Ø" and determine the status of inputs to the touch panel to see if anyone has applied a finger or a pointer to the faceplate 12 of the display. This initiation of the search CALL TP-SEARCH is indicated by block 88.

Following step 88, the next step in the sequence is to determine whether any of the light beams which extend across the faceplate are interrupted. This is indicated in Fig. 8 by the question touch panel active (TP ACTIVE) diamond 90. If some of the beams are interrupted, the touch panel is active, the answer is "YES" and we proceed to the question indicated by the diamond 92 which asks whether touch panel "Ø" has been active during several successive scans or whether the number of times which it has been active is equal to or greater than a predetermined "active initial count"-ACTIVE Ø ≧ ACTIVE INIT. CNT. The reason for this step is to avoid transient operation of the system if, for example, an insect or other object happens to interrupt the beams and give a transitory isolated interruption of one of the light beams. Thus, the "active" counter 76 (Fig. 7) may be incremented by pulses applied on lead 94 indicating that at least one of the beams has been interrupted during a particular scan cycle. The output from the active counter 76 may be held in an output buffer within the counter and may be sensed or read over the bus 96.

Accordingly, if the touch panel has not been active for at least the predetermined number of scans the answer to the question indicated in diamond 92 is "NO" whereupon the active counter 76 would be incremented INCR (ACTIVE Ø), as indicated by the block 98. In practice in the normal microprocessor, instead of a separate hardwired active counter as indicated by the block 76, the same function is accomplished through the use of a random access memory such as RAM 72 as shown in Fig. 6, and during successive scans, the number stored in a particular address in the RAM 72 is withdrawn from memory incremented to the next higher number and inserted back into a selected random access memory location. This is normally all accomplished under the control of the program sequences in the read-only memory 70. Of course, other memory could be used uch as RAM 72 or other memories such as programmable read only memories (PROMS) and erasable PROMS EPROMS.

However, if the touch panel has been active for at least the predetermined number of scans the answer to the activity inquiry indicated by diamond 92 is "YES", and then the sequence steps 102, 104 and 106 are followed. Block 102 indicates that the series of steps are the sequence of operation as set forth in Fig. 9 will be called into play. More specifically, this involves the smoothing routine CALL (TP-SMOOTH) whereby the video position designation maker, or cursor 50, may be positioned with much greater precision than the detectable accuracy of the detected location of a finger on the faceplate of the touch panel. This will be described in some detail in connection with Fig. 9.

Sequence step 104 is "CALL UPDATE=OUTPUT BUFFER", and this means that the new position data for the cursor 50 derived in accordance with the sequence of Fig. 9 is supplied from the touch panel data processor 26 to be employed by the display processor 28 to locate the video position designation marker, or cursor 50, on the display video screen.

Step 106 of Fig. 8 indicates that the DE-Active Ø counter 78 of Fig. 7 is reset to 0. The de-active counter 78 is employed at the time that the user lifts his finger off the faceplate 12, and this counter 78 is reset to 0 at the time when the touch panel has been active for several successive scans.

Now, returning to the TP-ACTIVE diamond 90, if the touch panel is not active, and no beams are interrupted, we proceed along the branching path extending vertically down from diamond 90 to block 108 which indicates that the de-active counter 78 is to be incremented INCR (DE-ACTIVE Ø). The next step 110 indicates that the active counter 76 is to be reset to 0 ACTIVE Ø=Ø. The diamond 112 asks the question as to whether the de-active counter 78 has reached its final count DE-ACTIVE Ø=DE-ACTIVE FINAL COUNT. In the present case where the scans occur approximately 30 times per second, the full count for the de-active counter 78 might be set to "3" so that, after approximately one-tenth of a second of no beams having been interrupted, we could conclude that a person's finger has been positively withdrawn from the faceplate. If the answer to the question posed by diamond 112 is "NO", then we proceed to block 114 indicating that the same procedure will be followed for touch panel 1, a second touch panel addressed in the system TP DATA ADDRESS=TP DATA 1.

However, if the de-active counter 78 has reached its final count (for example, 3), then the answer is "YES" and we proceed to sequence step 116 designated "CALL SENT OUT ACTIVATE". This means that position data is selected from several steps back, on the basis that, as the person removed his figner from the faceplate, he may have done so at an angle and might have produced an undesired and erroneous input position data to the video display. Accordingly, by going back several steps prior to the first scan when the beams were not interrupted, an accurate pre-transient position may be determined.

Now, turning to Fig. 9, this sequence diagram relates to the obtaining of smooth and precise input data for positioning the video position designation marker or cursor from relatively coarse information provided by the touch panel. More specifically, in this regard, the successive beams might characteristically be spaced apart by a distance "D" which is 2.54 mm (one-tenth of an inch) or 3.81 mm (0.15 inch), while the position marker on the video screen may be located to an accuracy of one picture element which is in the order of about 0.25 mm—i.e. ten one-thousandth (0.010) of an inch. From an overall basis, and as developed in detail hereinbelow, the sequence of Fig. 9 will give the increased accuracy by combining location data of the finger and position data of the cursors from successive scans with velocity and acceleration corrections based on the movement and the rate of movement of the finger from one scan to the next. This additional information will permit very precise positioning of the cursor 50.

For example, when a cursor 50 is at a position $YP_{OLD}$ on the display and it is desired to move the cursor 50 to a new position $YP_{NEW}$, the finger placed on the touch panel faceplate 12 operates to designate the new position of the cursor 50. In the illustrated embodiment (Fig. 4), the vertical coordinate with the finger $YF_{NEW}$ is off-set below the desired new vertical coordinate $YP_{NEW}$ of the cursor so that the finger does not block the view of the cursor 50 while positioning it to the new position $YP_{NEW}$.

Now, returning to Fig. 9, the uppermost block 122 in this figure of the drawings is designated "TOUCH PANEL SMOOTH", indicating that the sequence of Fig. 9 is directed to providing smoothed location data as determined from the relatively coarse position input information provided from successive scans of the light beams across the faceplate. The second block 124 indicates that the new position, "F" of the finger both in the horizontal or "X" direction and in the vertical or 'Y" direction is read and stored —READ & STORE $XF_{NEW}$, $YF_{NEW}$. Also, if this sequence is the first after a new active, $XP_{OLD}$ is set to $XF_{NEW}$, $YP_{OLD}$ is set to $YF_{NEW}$, XV (X-velocity) is set to zero, and YV (Y-velocity) is set to zero to cause the cursor 50 to establish or "jump to" the new initial position. The next step as indicated by block 126 is to calculate the different $\Delta XF$ between the new finger loction $XF_{NEW}$ and the previous position of the cursor $XP_{OLD}$ or the video position designation marker 50. In accordance with diamond 128, the next step is to determine whether the change in location of the pointer $\Delta XF$ is greater than the diodes spacing distance, "D", which as mentioned above, may be greater than 2.54 mm (one-tenth of an inch) or approximately 3.8 mm (0.15 inch). Incidentally, the block 128 relates to positive values for the change $\Delta XF$ in the X position. Similarly, the block 130 indicates a determination as to whether the change in pointer location $\Delta XF$ in the negative direction is less than the spacing −D. Now, in considering the results of the examination of the outputs from diamonds 128 and 130, if the change is less than plus or minus D, the output signal is NO and we reach block 132, which indicates that, for the purposes of subsequent calculations, the variable "A" will be selected as 0. On the other hand, if the output signal is YES and we reach blocks 134 or 136, it means that the shift in position in the X direction had an absolute value which was more than the light beam spacing, and accordingly, the factor designated "TEMP" which is in TEMPORARY STORAGE and is employed in the formula in block 138 is taken as plus or minus D. The calculation as indicated in block 138 is then accomplished, and the factor A as designated in block 132, or as calculated in block 138 is employed in calculating the velocity XV for moving the cursor based upon movement of the finger between successive scans, and the new position $XP_{NEW}$ of the cursor 50.

It may be particularly noted from the two formulae in block 140 that the new cursor position $P_{NEW}$ is determined by using the old cursor position $P_{OLD}$, and the multiplying the velocity $V_{NEW}$ times the interval between scans $\Delta T$ in accordance with the following generalized relationship which holds true for both the X and the Y coordinates:

$$P_{NEW}=P_{OLD}+(V_{NEW} \cdot \Delta T)$$

where:
$P_{NEW}$ is the precise new position of the cursor;
$P_{OLD}$ is the precise old position of the cursor, determined from the prior scan;
$V_{NEW}$ is the new velocity;
$\Delta T$ is the time interval between scans;
where:
$V_{NEW}$ is a new velocity function derived from the old and the new cursor positions, the old and new pointer locations, and their coordinate and relative positions, locations, velocities, and accelerations modulated by geometrical values of damping factor K and gain factor G based upon the size and positional accuracy of the display and the touch panel input.

This is, of course, the well-known formula that distance is equal to velocity times time. However, the present development is believed to be unique in recognizing that very fine positioning of a cursor is possible while maintaining positional correlation with the pointer from coarse input data, using position, and velocity and/or acceleration corrections to position the cursor as set forth, for example, in Fig. 9.

The next section of the sequence diagram of Fig.

9, extending from block 142 through block 144, indicates a calculation for the Y direction which is substantially the same as that discussed hereinabove in connection with blocks 126 through 140 relating to the X direction position and velocity changes. Block 146, toward the bottom of Fig. 9, indicates the storage of the new values for the position and velocity $(XP_{NEW}, YP_{NEW})$ $(XV_{NEW}, YV_{NEW})$ in both the X or horizontal direction and the Y or vertical direction. In addition, the block 146 indicates the utilization of the new position data to reposition the cursor 50. The final block 148 in Fig. 9 indicates a return to the main sequence of Fig. 8 which is indicated by block 104 in the sequence diagram of Fig. 8.

Summarized in examples from the viewpoint of a person using the touch panel, the results of accomplishing the Fig. 9 sequences are as follows. First, the smoothing equation is ignored and the cursor jumps to the new video position designated by his finger for a new touch panel activation resulting from his initial application of his finger to the faceplate. This direct cursor jump results from the forcing of the new initial cursor position to be set equal to the new initial finger positions with zero velocities resulting in zero velocity and gain/acceleration compensation calculations in the Fig. 9 sequence. Second, the cursor follows his finger movements, directly and smoothly whether he moves his finger slowly or rapidly across the faceplate. This direct cursor following of the finger results from selecting gain G and damping K constants such that the velocity and gain/acceleration compensation calculations correspond with the finger position and movement data. For example, if the operator moves his finger rapidly, the distance between the old position and the new position, the velocity of the change from the old position to the new position and the acceleration from the old position to the new position are all greater than they would be for slower movement, with the result that the cursor moves more linearly with finger position and movement of ths type. Finally, these same gain and damping constants are also selected such that, for the range of very slow and very small finger movements, such as when the finger is effectively nudging the cursor a very slight distance, the velocity and gain/acceleration compensation calculations are very nonlinear with finger movements, with the cursor indirectly moving very, very slowly and very, very small distances, but in the same direction as the person designates a precise display location. Thus, it is possible to nudge the cursor 50 a distance of one picture element even though the beam spacing is, for example, 10 to 15 times the dimension of a picture element.

Incidentally, in passing, it may be noted that the shift register 74 in Fig. 7 indicates schematically that new velocity and position data are entered through bus 75 toward the top of the shift register and that during successive scan intervals, the information is shifted downwardly so that at each level, older position and velocity data is available.

The bus 75 also permits the withdrawal of information from any desired recent past period of time, for example, from the next prior scan or from a scan at three or four scans previous. Access to any desired stage of the shift register for the entry or withdrawal of information is conventionally accomplished through suitably addressed gates associated with each shift register stage. Data from the previous scan may be employed in certain of the calculations in order to obtain velocity data; and position data from a scan which took place three or four scans previously is employed in the implementation of the CALL SENT OUT ACTIVATE block 116 (Fig. 8) involving the elimination of transient errors as a person removes his finger from the faceplate.

Concerning another point relative to block 124 of Fig. 9, the position data is provided with offset information in order to accommodate for the fact that the person pointing toward a particular position on the faceplate normally has his finger offset slightly below the point to which he wishes the cursor to be located to provide a full view of the desired video position and the cursor. Accordingly, a slight offset is provided for the X finger position, but not for the horizontal or Y finger position location.

It may also be noted that, in cases where the input touch panel does not overlie the display, no offset would be needed. Thus, as mentioned above, if an input touch panel were available at an operator's desk, with a display out of reach but in view, the operator could see the displayed cursor location when his finger is at the predetermined location on the input touch panel and provide operator feedback in watching the cursor move to the precise desired point by moving the finger on the local input panel. It may also be noted in passing that the display could be in the form of a plasma panel, a liquid crystal display, or arrays of light emitting diodes or other display techniques, instead of a cathode ray tube.

As one further point, it has been noted that the cursor 50 is positioned as a calculated function of input location data, pointer or finger velocity data, and an acceleration factor, in determining the new cursor position. As an alternative to the use of mathematical formulae and performing the calculations, a look-up table may be provided which would give values for changes in the position of the cursor depending on the changes in sensed input positions during successive scan intervals.

In conclusion, it is to be understood that the foregoing description and the embodiments shown in the drawing merely represent one mode of implementation of the touch panel display system of the present invention. Other variations may be devised to accomplish the same function, through the use of the other sequence steps, or other logic hardware. As mentioned above, instead of an array of light beams, other types of touch panel inputs, such as switches or capacitive elements on a transparent and/or flexible plate over the display or remote from the display, may be employed. In addition, although described in connection with a cathode ray tube as the display technology, the present system is also applicable to other forms of displays which have been proposed heretofore or which are currently under development.

**Claims**

1. A display position designation system using a coarse touch panel input comprising:

means (22) for providing a display;

means (28) for locating a cursor (50) in said display to a predetermined positional accuracy;

touch panel input means (24) corresponding generally to the face of said display, and having a positional accuracy which is relatively coarse as compared with the predetermined positional accuracy of the display;

means (26, 46, 48) for periodically scanning said touch panel input means to obtain the coarse position data based on the location of a pointer during excessive scan intervals of time;

means (Figure 9) for successively determining new precision cursor positions during each scan interval and or positioning the cursor in the precise newly determined position on said display;

characterised in that the means (Figure 9) for determining new cursor positions are arranged to determined said positions based on the prior position of the cursor ($XP_{old}$, $YP_{old}$), the new location of the pointer ($XF_{new}$, $YF_{new}$), a velocity factor (A) based upon prior positions and locations of the cursor and pointer, and a damping element ($XV_{old} - K.XV_{old}$, wherein, for large pointer movements, the damping element is negligible in relation to the velocity factor, resulting in cursor movements closely relating to the pointer movements, whereas for small pointer movements of the order of the predetermined positional accuracy of the display, the damping element is significant in relation to the velocity factor, allowing for cursor positioning to an accuracy greater than that of the predetermined positional accuracy of the input means.

2. The display position designation system of Claim 1, in which said means for successively determining new precision cursor positions is responsive to the coordinate position of the cursor and the coordinate location of the pointer and the position of the cursor and the location of the pointer relative to one another.

3. The display position designation system of Claim 1 in which said means for successively determining new precision cursor positions is responsive to acceleration factors based upon the change in velocity of the cursor and the pointer between scan intervals.

4. The display position designation system of Claim 3 in which the acceleration factors are further modulated by gain and damping factors based upon the size and positional resolution of the display and the touch panel input means.

5. The system using a coarse touch panel input as defined in Claim 1 including means for responding to the initial application of the pointer to the touch panel for bypassing said means for successively determining new precision cursor location and to jump the cursor to a new position corresponding to the initial location of the pointer.

6. The system of Claim 1 using a coarse touch panel input in which the position of the cursor is offset from the location of the pointer whereby the cursor can be readily viewed by an operator.

7. A position designation system according to any one of claims 1 to 6, further comprising:

means for compensating for touch initiation dynamics by delaying any changes in the position of the cursor until the location of the pointer on the touch panel input means (24) has been scanned for a predetermined plurality of scan intervals.

8. A display position designation system according to any one of claims 1 to 4, further comprising:

means (Figure 8) eliminating cursor location termination transients by locating the cursor at the precise calculated position on said display based on at least one touch panel scan earlier than the final touch panel scan before the termination of touch panel pointer input indications, whereby the angular removal of the pointer will avoid an erroneous cursor position on the display.

9. A system using a coarse touch panel input as defined in any one of the preceding claims wherein said touch panel input means includes an array of light beams which are to be interrupted by a pointer at the position selected.

10. A system using a coarse touch panel input as defined in any one of the preceding claims wherein said touch panel input means include an array of interruptable light beams extending across said display in an intersecting matrix.

11. A system as defined in any one of the preceding claims wherein said touch panel extends across the face of the display.

12. A display position designation system according to any one of the preceding claims, further comprising:

means (72) storing information derived from said scanning means during successive scanning intervals;

means (126—144) for successively determining precision cursor positions based on the stored information from the successive scans; and

means (28) for positioning the cursor in the precise newly determined location on said display following each succesive scan based upon the change in position of both the cursor and the location of the pointer position between successive scans.

13. A system using a coarse touch panel input as defined in Claim 12 including means for delaying changes in cursor position until the touch panel input means has been scanned for a plurality of scan intervals.

14. A system using a coarse touch panel input as defined in Claim 13 including means for selecting and displaying a cursor position which is based on at least one touch panel scan earlier than the final touch panel scan before termination of pointer input indications.

15. A system using a coarse touch panel input as defined in Claim 13 including means for determining new precise positional information in accordance with the following relationship:

$$P_{NEW}=P_{OLD}+(V_{NEW} \cdot \Delta T)$$

where:

$P_{NEW}$ is the precise new position;
$P_{OLD}$ is the precise old position determined from the prior scan;
$V_{NEW}$ is the new velocity; and
$\Delta T$ is the time interval between scans.

## Patentansprüche

1. Ein Anzeigenpositionserkennungssystem, das einen Grobberührungsfrontplatteneingang benutzt, mit:

Vorrichtungen (22) zur Erzeugung einer Anzeige;

Vorrichtungen (28) zum Auffinden einer Schreibmarke (50) in der Anzeige nach einer vorherbestimmten Positioniergenauigkeit;

einer Berührungsfrontplatteneingangsvorrichtung (24), die im wesentlichen der Fläche der Anzeige entspricht, und eine Positioniergenauigkeit hat, die im Vergleich zu der vorherbestimmten Positioniergenauigkeit der Anzeige relativ grob ist;

Vorrichtungen (26, 46, 48) zum periodischen Abtasten der Berührungsfrontplatteneingangsvorrichtung, um die Grobpositionsdaten in Abhängigkeit des Ortes einers Zeigers während aufeinanderfolgenden Abtastzeitintervallen zu erhalten;

Vorrichtungen (Fig. 9) zum aufeinanderfolgenden Festlegen neuer Präzisionsschreibmarkenpositionen während jedes Abtastintervalls und/oder Anordnen der Schreibmarke in der präzisen, neu festgelegten Position auf der Anzeige, dadurch gekennzeichnet, daß

die Vorrichtungen (Fig. 9) zum Festlegen neuer Schreibmarkenpositionen angeordnet sind, um die Positionen festzulegen, die auf den vorangegangenen Positionen der Schreibmakre ($XP_{old}$, $YP_{old}$, dem neuen Ort des Zeigers ($XF_{new}$, $YF_{new}$), einem Geschwindigkeitsfaktor A, der von der vorherigen Position und dem Ort der Schreibmarke und des Zeigers anhängig ist und einem Dämpfungselement ($XV_{old}-K.XV_{old}$) abhängig ist, wobei für große Zeigerbewegungen das Dämpfungselement im Verhältnis zu dem Geschwindigkeitsfaktor vernachlässigbar ist, und resultierende Schreibmarkenbewegungen eng mit den Zeigerbewegungen zusammenhängen, wobei für kleine Zeigerbewegungen in der Größenordnung der vorherbestimmten Positionsgenauigkeit der Anzeige das Dämpfungselement signifikant im Verhältnis zu dem Geschwindigkeitsfaktor ist, so daß eine Schreibmarkenanordnung in einer Genauigkeit größer als die vorherbestimmte Positionsgenauigkeit der Eingabevorrichtungen möglich ist.

2. Das Anzeigenpositionserkennungssystem von Anspruch 1, in dem die Vorrichtungen für die aufeinanderfolgende Festlegung der neuen Präzisionsschreibmarkenpositionen abhängig ist von der Koordinatenposition der Schreibmarke und dem Koordinatenort des Zeigers und der Position der Schreibmarke und dem Ort des Zeigers relative zueinander.

3. Das Anzeigenpositionserkennungssystem von Anspruch 1, in dem die Vorrichtungen zum aufeinanderfolgenden Festlegen neuer Präzisionsschreibmarkerenpositionen empfänglich sind für Beschleunigungsfaktoren, die anhänig sind vom Geschwindigkeitswechsel der Schreibmarke und des Zeigers zwischen Abtastintervallen.

4. Das Anzeigenpositionserkennungssystem von Anspruch 3, in dem die Beschleunigungsfaktoren ferner durch Verstärkungs- und Dämpfungsfaktoren moduliert sind, die von der Größe und der Positionsauflösung der Anzeige und dem Berührungsfrontplatteneingang abhängig sind.

5. Das System, das einen Grobberührungsfrontplatteneingang wie in Anspruch 1 definiert benutzt, mit Vorrichtungen, die auf die Erstanwendung des Zeigers auf der Berührungsfrontplatte ansprechen, um die Vorrichtungen zum aufeinanderfolgenden Festlegen neuer Schreibmarkenorte zu umgehen und die Schreibmarke zu der neuen Position entsprechend dem ersten Ort des Zeigers springen zu lassen.

6. Das System von Anspruch 1, das einen Grobberührungsfrontplatteneingang verwendet, in dem die Anordnung der Schreibmarke von dem Ört des Zeigers abgesetzt ist, wodurch die Schreibmarkz leicht von einem Operator beobachtet werden kann.

7. Ein Positionserkennungssystem nach einem der Ansprüche 1 bis 6, das ferner beinhaltet:

Vorrichtungen zum Kompensieren von Berührungseinführungsdynamiken durch Verzögerung jedweder Wechsel in der Position der Schreibmarke, bis die Lage des Zeigers auf der Berührungsfrontplatteneingangsvorrichtung (24) über eine vorbestimmte Vielzahl von Abtastintervallen abgetastet worden ist.

8. Das Anzeigenpositionserkennungssystem nach einem der Ansprüche 1 bis 7, das ferner beinhaltet:

Vorrichtungen (Fig. 8) zum Beseitigen von Schreibmarkenstellenbeendigungsübergängen durch Anordnen der Schreibmarke an einer präzise errechneten Stelle auf der Anzeige basierend auf wenigstens einer Frontplattenberührungsabtastung eher als die letzte Frontplattenberührungsabtastung vor der Beendigung des Berührungsfrontplatteneingangsanzeigers, wobei die Winkelentfernung des Zeigers eine fehlerhafte Schreibenmarkenstelle auf der Anzeige verhindert.

9. Ein System, das einen Grobberührungsfrontplatteneingang, wie in einem der vorhergehenden Ansprüche definiert, verwendet, worin die Berührungsfrontplatteneingangsvorrichtung eine Anordnung von Lichtstrahlen beinhaltet, die durch den Zeiger bei der gewählten Position unterbrochen werden.

10. Ein System, das einen Grobberührungsfrontplatteneingang, wie in einem der vorhergehenden Ansprüche definiert, verwendet, worin die Berührungsfrontplatteneingangsvorrichtungen eine Anordnung von unterbrechbaren Lichtstrahlen beinhaltet, die sich über die Anzeige in einer überkreuzenden Matrix hinziehen.

11. Ein System, wie es in einem der vorhergehenden Ansprüche definiert wurde, worin die Berührungsfrontplatte sich über die Fläche der Anzeige hinzieht.

12. Ein Anzeigenpositionserkennungssystem nach einem der vorhergehenden ansprüche mit:

Vorrichtungen (72) zum Speichern von Informationen, die von den Abtastvorrichungen während aufeinanderfolgender Abtastintervalle herrühren.

Vorrichtungen (126 bis 144) zum aufeinanderfolgenden Festlegen von Präzisionsschreibmarkenpositionen, die auf den gespeicherten Informationen von den aufeinanderfolgenden Abtastungen basieren; und

Vorrichtungen (28) zum Anordnen der Schreibmarke an einer präzisen neu festgelegten Stelle auf der Anzeige nach jeder aufeinanderfolgenden Abtastung, was auf den Wechsel der Schreibmarkenposition sowie der Stelle der Zeigerposition zwischen aufeinanderfolgenden Abtastungen basiert.

13. Ein System, das einen Grobberührungsfrontplatteneingang wie im Anspruch 12 definiert verwendet, mit Vorrichtungen zum Verzögern des Wechsels der Schreibmarkenposition bis die Berührungsfrontplatteneingangsvorrichtung über eine Vielzahl von Abtastintervallen abgetastet worden ist.

14. Ein System, das einen Grobberührungsfrontplatteneingang wie in Anspruch 13 definiert, mit Vorrichtungen zum Auswählen und Anziegen einer Schreibmarkenposition, die auch wenigstens einer Berührungsfrontplattenabtastung eher als die letzte Berührungsfrontplattenabtastung vor der Beendigung der Zeigereingangsanzeige basiert.

15. Ein System, das einen Grobberührungsfrontplatteneingang wie in Fig. 13 definiert erwendet mit Vorrichtungen zum Festlegen neuer präziser Positionsinformationenübereinstimmung mit dem folgenden Verhältnis:

$$P_{NEW} = P_{OLD} + (V_{NEW} \times \Delta t)$$

wobei

$P_{NEW}$ die präzise neue Position ist;

$P_{OLD}$ die präzise alte Position ist, die von der vorhergehenden Abtastung festgelegt wurde;

$V_{NEW}$ die neue Geschwindigkeit ist; und

$\Delta t$ das Zeitintervall zwischen zwei Abtastungen ist.

**Revendications**

1. Système de désignation de position sur un affichage utilisant un dispositif d'entrée à panneau de contact grossier comprenant:

des moyens (22) pour fournir un affichage;

des moyens (28) pour situer un curseur (50) dans ledit affichage avec une précision de position prédéterminée;

des moyens d'entrée à panneau de contact (24) correspondant généralement au devant dudit affichage, et présentant une précision de position est relativement grossière en comparaison avec la précision de position prédéterminée de l'affichage;

des moyens (26, 46, 48) pour balayer périodiquement lesdits moyens d'entrée à panneau de contact en vue d'obtenir les données de position grossière fondées sur la situation d'un pointeur pendant des intervalles de temps de balayage successifs;

des moyens (figure 9) pour déterminer successivement de nouvelles positions du curseur de précision pendant chaque intervalle de balayage et ou positionneur le curseur dans la position précise nouvellement déterminée sur ledit affichage,

caractérisé en ce que les moyens (figure 9) pour déterminer de nouvelles positions du curseur sont disposés pour déterminer lesdites positions en fonction de la position antérieure du cuseur ($XP_{OLD}$, $YP_{OLD}$), la nouvelle situation du pointeur ($XF_{NEW}$, $YF_{NEW}$), un facteur de vitesse (A) en fonction des positions antérieures et des situations du curseur et du pointeur, et un élément d'amortissement ($XV_{OLD} - KXV_{OLD}$), dans lequel, pour de grands mouvements du pointeur, l'élément d'amortissement est négligeable relativement au facteur de vitesse, ayant pour conséquence des mouvements du curseur en relation étroite avec les mouvements du pointeur, tands que pour de petits mouvements du pointeur de l'ordre de la précision de position prédéterminée de l'affichage, l'élément d'amortissement est significatif relativement au facteur de vitesse, permettant un positionnement du curseur avec une précision plus grande que la précision de position prédéterminée des moyens d'entrée.

2. Système de désignation de position sur un affichage, selon la revendication 1, dans lequel les moyens pour déterminer successivement de nouvelles positions du curseur de précision sont sensibles à la position en coordonnées du curseur, à la situation en coordonnées du pointeur et à la position du curseur et à la situation du pointeur relativement l'un par rapport à l'autre.

3. Système de désignation de position sur un affichage, selon la revendication 1, dans lequel les moyens pour déterminer successivement de nouvelles positions du curseur de précision sont sensibles à des facteurs d'accélération en fonction du changement de vitesse du curseur et du pointeur entre des intervalles de balayage.

4. Système de désignation de position sur un affichage, selon la revendication 3, dans lequel les facteurs d'accélération sont en outre modulés en gain et en facteurs d'amortissement en fonction de la dimension et de la résolution de position de l'affichage et des moyens d'entrée à panneau de contact.

5. Système utilisant un dispositif d'entrée à panneau de contact grossier, selon la revendication 1, comportant des moyens sensibles à l'application initiale du pointeur sur le panneau de contact pour supplanter les moyens pour déterminer successivement une nouvelle situation du curseur de prévision et afin de faire sauter le curseur à une nouvelle position correspondant à la situation initiale du pointeur.

6. Système selon la revendication 1, utilisant un dispositif d'entrée à panneau de contact grossier dans lequel le positionnement du curseur est décalé par rapport à la situation du pointeur de sorte que le curseur peut être vu aisément par un opérateur.

7. Système de désignation de position selon l'une quelconque des revendications 1 à 6, comprenant en outre:

des moyens pour compenser des dynamiques de début de contact en retardant tous changements dans la position du curseur jusqu'à ce que la situation du pointeur sur les moyens d'entrée à panneau de contact (24) ait été balayée pendant un nombre prédéterminé d'intervalle de balayage.

8. Système de désignation de position sur un affichage selon l'une quelconque des revendications 1 à 7, comprenant en outre:

des moyens (figure 8) éliminant des transistoires de fin de situation du curseur en situant le curseur à la position précise calculée sur ledit affichage en fonction d'au moins un balayage du panneau de contact antérieur au balayage final du panneau de contact avant la fin des indications d'entrée du pointeur du panneau de contact, de sorte que la suppression angulaire du pointeur évitera une position erronnée du curseur sur l'affichage.

9. Système utilisant un panneau de contact grossier tel que défini dans l'une quelconque des revendications précédentes, dans lequel les moyens d'entrée à panneau de contact comportent un ensemble de faisceaux lumineux qui doivent être interrompus par un pointeur à la position choisie.

10. Système utilisant un dispositif d'entrée à panneau de contact grossier tel que défini dans l'une quelconque des revendications précédentes, dans lequel lesdits moyens d'entrée à panneau de contact comporte un ensemble de faisceaux lumineux interruptibles s'étendant à travers l'affichage dans une matrice d'intersection.

11. Système selon l'une des revendications précédentes, dans lequel ledit panneau de contact s'étend à travers le devant de l'affichage.

12. Système de désignation de position sur un affichage selon l'une des revendications précédentes, comprenent en outre:

des moyens (72) pour stocker une information issue desdits moyens de balayage pendant des intervalles de balayage successifs;

des moyens (126—144) pour déterminer successivement des positions du curseur de précision en fonction de l'information stockée à partir des balayages successifs; et

des moyens (28) pour positionner le curseur dans la situation précise nouvellement déterminée à la suite de chaque balayage successif en fonction du changement de position d'à la fois le curseur et la situation de la position du pointeur entre balayage successifs.

13. Système utilisant un dispositif d'entrée à panneau de contact grossier tel que défini dans la revendication 12, comportant des moyens pour retarder des changements de position du curseur jusqu'à ce que les moyens d'entrée à panneau de contact aient été balayés pendant plusieurs intervalles de balayage.

14. Système utilisant un dispositif d'entrée à panneau de contact grossier tel que défini dans la revendication 13, comportant des moyens pour choisir et afficher une position du curseur qui dépend d'au moins un balayage de panneau de contact antérieur au balayage de panneau de contact final avant la fin des indications d'entrée du pointeur.

15. Système utilisant un dispositif d'entrée à panneau de contact grossier tel que défini dans la revendication 13, comportant des moyens pour déterminer une nouvelle information de position précise selon la relative suivante:

$$P_{NEW} + P_{OLD} + (V_{NEW} \cdot \Delta T)$$

où

$P_{NEW}$ est la nouvelle position précise;

$P_{OLD}$ est l'ancienne position précise déterminée par rapport au balayage précédent;

$V_{NEW}$ est la nouvelle vitesse; et

$\Delta T$ est l'intervalle de temps entre balayages.

**Fig. 1.**

50
-14-
12

**Fig. 3.**

43
48
-34-
12
46
41
14

**Fig. 2.**

24

| TOUCH PANEL (COARSE) |
|---|
| DISPLAY |

22

TOUCH PANEL DATA PROCESSOR — 26

DISPLAY PROCESSOR — 28

-32-

BACKGROUND DISPLAY DATA SOURCE

30

Fig. 4.

Fig. 5.

DATA

USER OPTIONS

ADDRESS

Fig. 6.

TOUCH PANELS

UART 64

UART 64

UART 64

KTP BUS 66

μP 68

PORT 82

ROM 70

RAM 72

Fig. 7.

68-1 μP

66-1 BUS T.P.

FROM TOUCH PANELS

ROM 70-1

RAM 72-1

CURSOR POSITION, VELOCITY SHIFT REGISTER 74

75

94 INCREMENT
RESET
96

ACTIVE COUNTER 76

INCREMENT
RESET

DE-ACTIVE COUNTER 78

3

Fig. 8.

**84** TP – EXEC

**86** TP DATA ADDR = TP DATA Ø

**88** CALL TP-SEARCH

**90** TP ACTIVE ? — YES → **92** ACTIVEØ ≥ ACTIVE INIT. CNT. — YES → **102** CALL (TP-SMOOTH)

NO ↓

**108** INCR (DE-ACTIVE Ø)

**110** ACTIVE Ø = Ø

**112** DE-ACTIVEØ = DE-ACTIVE FIN CNT — YES → **116** CALL SENT OUT ACTIVATE

**92** NO ↓ **98** INCR (ACTIVE Ø)

**102 / 104** CALL UPDATE = OUTPUT BUFFER

**106** DE-ACTIVATED Ø = Ø

**114** TP DATA ADDR = TP DATA I

EP 0 182 904 B1

Fig. 9.

TOUCHPANEL
SMOOTH   122

READ & STORE
XF NEW, YF NEW   124

$\Delta XF = XF\ NEW - XP\ OLD$   126

$\Delta XF > D$   128   NO

$\Delta XF < -D$   130   NO

A = Ø   132

TEMP = -D   134   YES

TEMP = D   136   YES

$A = G(\Delta XF - TEMP)$   138

XV NEW = XV OLD + A - (K·XV OLD)
XP NEW = XP OLD + (XV NEW·$\Delta T$)   140

$\Delta YF = YF\ NEW - YP\ OLD$   142

$\Delta YF > D$   NO

$\Delta YF < D$   NO

A = Ø

TEMP = -D   YES

TEMP = D   YES

$A = G(\Delta YF - TEMP)$

YV NEW = YV OLD + A - (K·YV OLD)
YP NEW = YP OLD + (YV NEW·$\Delta T$)   144

XP OLD = XP NEW
XV OLD = XV NEW
YP OLD = YP NEW
YV OLD = YV NEW   146

RETURN   148

XF = X FINGER POSITION
YF = Y FINGER POSITION
WITH OFFSET

XP OLD = PREVIOUS CURSOR
POSITION

D = BEAM SPACING

TEMP = TEMPORARY STORAGE

A = VARIABLE "A"

G = GAIN CONSTANT

XV = X DIRECTION VELOCITY
$\Delta T$ = TIME INTERVAL
K = DAMPING CONSTANT

YP OLD = PREVIOUS CURSOR
POSITION

YV = Y DIRECTION VELOCITY